Europäisches Patentamt

European Patent Office

Office européen des brevets

(11) Publication number: **0 297 069**
**A2**

(12) **EUROPEAN PATENT APPLICATION**

(21) Application number: **88850219.2**

(22) Date of filing: **20.06.88**

(51) Int. Cl.⁴: **B 65 D 81/26**

(30) Priority: **23.06.87 GB 8714607**

(43) Date of publication of application:
**28.12.88 Bulletin 88/52**

(84) Designated Contracting States:
**AT BE CH DE ES FR GB IT LI LU NL SE**

(71) Applicant: **BRABIS INVESTMENT LTD.**
**P.O. Box 119 Commerce House Les Banques**
**St. Peters Port Guernsey Channel Islands (GB)**

(72) Inventor: **Berglund, Jan Olof Valentin**
**Buckland Cottage Hollywood Lane**
**Lymington Hants. SO4 9HD (GB)**

(74) Representative: **Inger, Lars Ulf Bosson**
**L + U INGER Patentbyra AB Garvaregatan 12**
**S-262 63 Ängelholm (SE)**

(54) **Process for the manufacture of a liquid absorbing pad.**

(57) The present invention relates to a process for the manufacture of a liquid absorbing pad comprising a liquid absorbing particulate material, whereby two sheetings (1,3) one of which at least being water permeable, and one of which at least being provided with a polymer being capable of fusing the sheetings (1,3) together while heated, fusing the sheetings (1,3) together in a longitudinal direction along the edges of the sheetings to form permanent sealings (4,5), and optionally sealing the sheetings together in a square pattern using a detachable seal (6,7), and providing the envelope formed with a granular water absorbing material, sealing at given intervals perpendicular to the longitudinal sealings (4,5) to form end sealings (9) being permanent.

Fig.

Bundesdruckerei Berlin

## Description

### PROCESS FOR THE MANUFACTURE OF A LIQUID ABSORBING PAD.

Technical Field

The present invention relates to a process for the manufacture of a liquid absorbing pad comprising a liquid absorbing material in particualte form.

The object of the present invention is to obtain an improved liquid absorbing pad to be used at the transport of food products, where the food product as such give off water, or where the food product is kept cold by means of ice, which melts during transport, and to obtain an improved, faster technique to manufacture such a pad.

Background of the invention.

It is previously known (NO-A1-830621, US-A-4,321,997) to transport food products on a liquid absorbing pad or pillow, which pad comprises a liquid absorbing material, and spacer means to prevent compression, and thereby a reduced absorption capacity of the absorbing material.

It has, however, turned out that the spacer means arranged are not distributed in the correct number, or are not kept in the place intended in such known pads, why problems have occurred concerning the intended, specified liquid absorption. Thus it is important that the spacer means are kept in place, and are present in an amount large enough, particularly at air freight transports of ice chilled fish, where large amounts of water are produced during a freight period, and where substantially no water is allowed to leave the transport package, as other simultaneously freighted goods then can be easily damaged.

It is also known from WO 87/00820 a manufacturing process for the production of water absorbing pads, whereby the spacer means are formed during the process. Thus a drops of a, during hardening swellable polymer are added along the envelope material and are swelled prior to the introduction of the water absorbing material into the envelope formed by water penetratable sheetings. It has, however, turned out that problem may occur in case the water to be absorbed is entering the pad at the corners, whereby the water absorbing material becomes filled with water and does not allow water to penetrate into the rest of the water absorbing material. The route has become blocked by the water swelled material. This may thus reduce the capacity of the pad, as well as it calls for a good design of the box to allow water to be equally distributed.

It is also a hygienic demand that water, often blood mixed from the slaughtered fish, shall not penetrate out off the package, and that it is kept isolated from the fish to give maximal shelf life. Today, it is particularly common to freight cultivated, slaughtered fresh fish from Scandinavia to North America, where the freight time, as easily understood, become long and chilling ice melts almost completely during this time period, even if the freight takes place in heat insulated boxes.

Description of the present invention.

It has now surprisingly been shown possible to eliminate these problems and to manufacture an improved liquid absorbing pad in accordance with the present process, which is characterized in that two sheetings, one of which at least being water permeable, and one of which at least being provided with a polymer material capable of fusing the sheetings together while heated, fusing the sheetings together in a longitudinal direction along the edges of the sheetings to form a permanent sealing of the sheetings togther, fusing the sheetings together a given intervals and cutting to form closed envelopes, and, optionally, fusing the sheetings together at a number of longitudinal lines between said longitudinal edges to form detachable sealings and simultaneously, optionally, forming transverse sealings to form detachable sealings, and providing between said sheetings a granular polymer which is capable of absorbing water while expanding and detaching the optional detachable sealings and forming one uniform pad.

Further characteristics are evident from the accompanying claims.

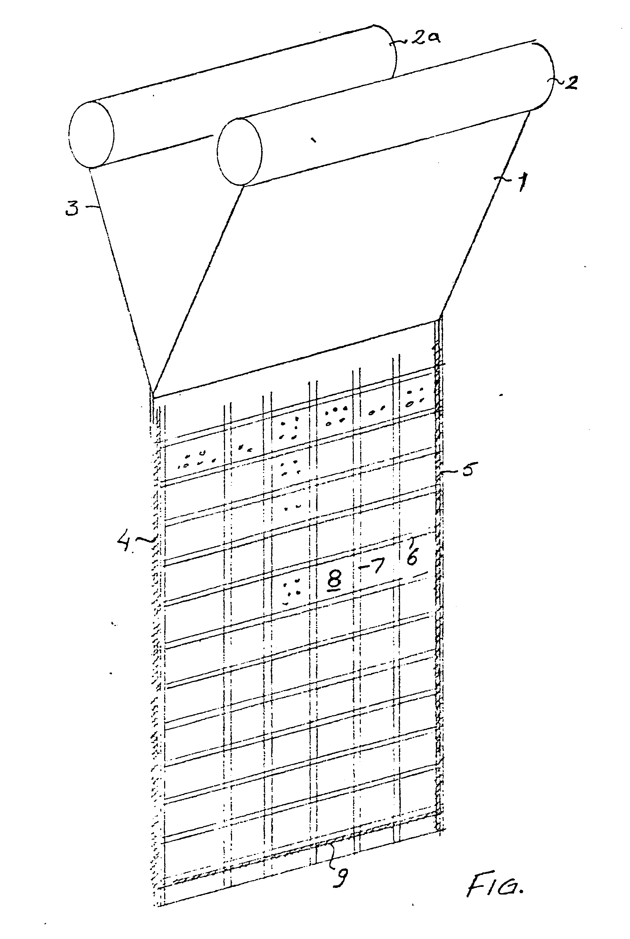

The invention will be described more in detail in the following with reference to the attached drawing, the single figure of which schematically shows a water absorbable pad of the invention while being manufactured.

1 denotes a first continous sheeting, preferably made of a cellulosic material, such as a non-woven fiber foil being unwinded from a first reel 2. Then the sheeting 1 is brought together with a second sheeting 3 coming from a reel 2a. In the combining point the sheetings 1 and 3 are sealed together along their two long sides 4, and 5 by applying heat and pressure along the edges. The sheetings 1,3 are thereby provided with sintered polyethylene layer, whereby when applying a heat having a temperature of 130-150°C the seal obtained will become permanent. Simultaneously with the bringing together of the sheetings 1,3 along their longitudinal edges 4,5 transverse sealing lines 6 are applied using heat and pressure, whereby the heat has a temperature of 80-90°C These transverse sealings 6 are applied with preferably equal distribution, e.g., at a distance of 8-12 cm from each other. Simultaneously, further longitudinal sealings 7 are applied using the same reduced heat with equal distribution over the width of the sheetings 1,3. The sealings 6,7 obtained using the lower heat being detachable from each other if a pressure is applied trying to part the sheetings 1,3. When one transverse sealing 6 has been applied and the longitudinal sealings 7 have been applied one shortly before applying a further transverse sealing the pockets 8 are filled with a water absorbing granular polymer in the form of poly sodium acrylate, such as SALSORB 84, and SALSORB DD (sold by Allied Colloids, Ltd, Bradford, GB) having a granular size of 0.1-5 mm, preferably 0.2-3 mm, which while absorbing water extends to pieces being 12-20 mm in diameter. The advantage using the poly sodium acrylate is that once it has absorbed the water this remains within the swollen granulate even if a pressure is applied thereon. An other advantage is that the granules remains intact although growing, which allows water to pass around the granules and to enter every spot of the pad, i.e. allowing maximal absorption. In each pocket form between the sheetings 1 g of poly sodium acrylate is added, which end up to be 50-70 g per pad having an absorption rate of about 7 liters per 60 g. When the granules swell during water absorption they exert a pressure from the inside against the sheetings of the pad, whereby the sealings 6,7 within the edge sealings 4,5 deattach and the pad forms one absorbing unit. At certain intervals edge sealings 9 are applied transverse the sheetings 1,3 and the sheetings 1,3 are cut to form pads of given length and width to fit with any box.

Using the present pad there is no need for spacer means to be applied within the pad to allow water to enter the pad but the absorbing material will form its own spacer means.

An other advantage using of the present pad is that it is easily transportable from a production site to the place of use as it takes very little volume. Thus a great number of pads can be packed in a container compared to the previous known pads.

In stead of applying the granules in pockets formed the sheeting(-s) can be provided with a glueing material onto which the granules can be attached. In this case no detachable sealings need to be applied but only the edge sealings.

The sheetings 1 and 3 need not be water permeable both of them. Thus one might consists of a water permeable cellulosic fibre material, such as non-woven material and the other may consist of a polymer foil, or a polymer coated, such as a polyethylene coated paper sheeting having apertures therein to provide for permeability.

In accordance with a further aspect of the present invention ≤ a liquid absorbing pad of above can be placed and/or manufactured onto a larger backing, such as a polyethylene foil, which has a larger width and length than the absorbing pad, whereby heat insulating sheets of e.g. foamed polyurethane or polystyrene are placed onto the extending parts of the foil. The heat insulating sheets have thereby such measures and dimensions that they fit into an outer package, such as a hard board box. Thus one places one sheet on each side of the long sides of the absorbing pad and one sheet on each side of the short sides of the absorbing pad. Thereby at each corner a free foil surface is created which is preferably prefolded so as to easily fold when placed into a box. A heat insulating sheet can of course be placed underneath the absorbing pad, either above or underneath the foil. By this embodiment of the invention a separate manufacture and distribution of the heat insulating sheets or combined sheets can be eliminated, and the application into a box is made more rational.

## Claims

1. Process for the manufacture of a liquid absorbing pad comprising a liquid absorbing, particulate material, **characterized** in that two sheetings (1,3), one of which at least being water permeable, and one of which at least being provided with a polymer material capable of fusing the sheetings (1,3) together while heated, fusings the sheetings (1,3) together in a longitudinal direction along the edges (4,5) of the sheetings (1,3) to form a permanent sealing of the sheetings (1,3) together, and fusing the sheetings together at given intervals in a transverse direction and cutting to form envelopes, and optionally fusing the sheetings together at a number of longitudinal lines between said edges (4,5) to form detachable sealings (7) and simultaneously, optionally, forming transverse sealings (6) to form detachable sealings, and providing the sheetings (1,3) with a granular polymer which is capable of absorbing water while swelling and expanding and optionally detaching the detachable sealings (6,7) and forming an uniform pad.

2. Process according to claim 1, **characterized** in that the water absorbing material consists of poly sodium acrylate, having a granular size of 0.1-5 mm, and a water absorbing capacity of about 7 liters per 60 g.

3. Process according to claim 1, **characterized** in that the deatchable longitudinal, and transverse sealings are provided to form pockets (9) into which the granular material is filled.

4. Process according to claim 1, **characterized** in that the granular material is attached to at least one of the sheetings prior to the sealing thereof.

5. Process according to claim 1, **characterized** in that the sheetings (1,3) consist of sintered polyethylene coated paper non-woven.

6. Process according to claim 1, **characterized** in that the edge (4,5,9) sealings are provided using a temperature of 130-150°C, and the detachable sealings (6,7) are provided using a temperature of 80-100°C.

7. Process according to claims 1-10, **characterized** in that the liquid absorbing pad is manufactured onto a backing having larger width and length than the pad, whereby on each side of the pad heat insulating sheets are placed to form a final heat insulating/liquid absorbing unit.

FIG.